# EUROPÄISCHE PATENTSCHRIFT

(11) **EP 2 663 598 B1**
(45) Veröffentlichungstag und Bekanntmachung des Hinweises auf die Patenterteilung: **26.04.2017**
(21) Anmeldenummer: 11796692.9
(22) Anmeldetag: 13.12.2011
(51) Int. Cl.: C08L 67/06, C08L 67/07, C09D 167/06, C09D 167/07, H01B 3/42, H02K 3/30

(54) **TRÄNKHARZFORMULIERUNG FÜR ELEKTRISCHE WICKLUNGEN**
IMPREGNATING RESIN FORMULATION FOR ELECTRICAL WINDINGS
FORMULATION DE RÉSINE D'IMPRÉGNATION POUR DES BOBINAGES ÉLECTRIQUES

(30) Priorität: 10.01.2011 DE 102011002489
(43) Veröffentlichungstag der Anmeldung: 20.11.2013
(73) Patentinhaber: Elantas GMBH, 46483 Wesel (DE)
(72) Erfinder: AL MASRI, Majdi, 21244 Buchholz (DE); BEBENROTH, Kim, Bastian, 22159 Hamburg (DE); HEINRICH, Stefanie, 21031 Hamburg (DE); LIENERT, Klaus-Wilhelm, 22763 Hamburg (DE)
(74) Vertreter: Schuck, Alexander
(86) Internationale Anmeldenummer: PCT/EP2011/072581
(87) Internationale Veröffentlichungsnummer: WO 2012/095231

(56) Entgegenhaltungen:
- WO-A1-2005/121246
- DE-B- 1 166 467
- US-A- 3 793 400
- US-A- 3 857 812
- US-A- 3 980 610

## Beschreibung

Die Erfindung betrifft Harzformulierungen enthaltend ein ungesättigtes Polyesterharz und Polybutadien sowie deren Verwendung als Tränk-, Verguss- und Überzugsmassen für elektrische oder elektronische Bauteile oder Geräte.

Unter Tränk-, Verguss- und Überzugsmassen werden Harzmassen verstanden, die in der Elektrotechnik nach den allgemein bekannten Verfahren der Tauchtränkung, der Heißtauchtränkung mit anschließender UV-/Wärmehärtung, der Träufeltechnik, dem Tauchrollierverfahren, dem Überflutungsverfahren und dem Verguss zur Tränkung von Wicklungen angewendet werden, gegebenenfalls unter zusätzlicher Anwendung von Vakuum oder Druck.

Tränk-, Verguss- und Überzugsmassen für elektronische Bauteile wie Motorwicklungen und Transformatorwicklungen sind häufig Formmassen auf Basis ungesättigter Polyester, die vinylisch ungesättigte Monomere wie Styrol, Methylstyrol, Vinyltoluol, Allylphthalate und monomere oder oligomere Acryl- oder Vinylester (sogenannte Reaktivverdünner) enthalten. Solche Reaktivverdünner enthaltende Systeme sind aus ökologischer und toxikologischer Sicht nicht unproblematisch und erfordern besondere Maßnahmen der Emissionskontrolle am Arbeitsplatz und bei der Abluftbehandlung.

Solche Standardsysteme sind beispielsweise in M. Winkeler, Varnish and resin usage with various motor construction, IEEE Proceedings, 1999, S. 143; M. Winkeler, Evaluation of electrical insulating resins for inverter duty application, IEEE Proceedings 1997, S 145; und Th. J. Weiss, Heatless cure coating of electrical windings, IEEE Proceedings, 1993, S. 443 beschrieben.

An Tränk-, Verguss- und Überzugsmassen für elektrische Bauteile werden hohe Anforderungen bezüglich deren thermischer Stabilität und Wärmeformbeständigkeit gestellt. Dabei ist es bekannt, ungesättigte Polyesterharze mit Dihydrodicyclopentadien-Strukturen zu modifizieren, um auf diese Weise nach der Aushärtung thermisch beständige Überzüge mit erhöhter Wärmeformbeständigkeit zu erhalten.

EP-A 0 968 501 offenbart Tränk-, Verguss- und Überzugsmassen für elektrische und elektronische Bauteile enthaltend ein ungesättigtes Polyesterharz und einen oligomeren oder polymeren Vinylether. Das ungesättigte Polyesterharz enthält Dihydrodicyclopentadien-Struktureinheiten, welche durch Umsetzung von Maleinsäurehalbestern des Dihydrodicyclopentadienol in den ungesättigten Polyester eingebracht werden. Die Tränk-, Verguss- und Überzugsmassen sind frei von Reaktivverdünnern aus ethylenisch ungesättigten Monomeren.

In EP-A 1 122 282 werden ebenfalls monomerfreie, emissionsarme Elektroisoliermassen auf Basis von ungesättigten Polyesterharzen beschrieben. Die Massen enthalten als Vernetzer ungesättigte Polyester mit Dihydrodicyclopentadien-Struktureinheiten sowie Polyester, welche 1-Propenyl-, Isopropenyl- oder Isoprenyl-Struktureinheiten enthalten.

Da bei der Aushärtung der ungesättigten Polyester eine Reaktionsschrumpfung eintritt, können dickere Schichten, beispielsweise von 20 mm Stärke, mit den Überzugsmassen des Standes der Technik nicht rissfrei hergestellt werden. Insbesondere bei der Imprägnierung von großen Generatoren und Motoren lässt sich im Verarbeitungsprozess die Bildung von dicken Schichten auf einigen Teilen des Blechpaketes nicht immer verhindern.

Aufgabe der Erfindung ist es, eine Tränk-, Verguss- und Überzugsmasse auf Basis eines ungesättigten Polyesterharzes bereitzustellen, die frei von ethylenisch ungesättigten Monomeren ist und bei der Aushärtung in dicken Schichten nicht zu Rissen führt. Aufgabe der Erfindung ist es insbesondere, solche Tränk-, Verguss- und Überzugsmassen bereitzustellen, die bei der Imprägnierung von großen Generatoren und Motoren, bei der sich die Ausbildung von dicken Schichten auf einigen Teilen des Blechpaketes nicht verhindern lässt, eingesetzt werden können.

Gelöst wird die Aufgabe durch eine Harzformulierung enthaltend
a) 80 bis 99 Gew.-% mindestens eines ungesättigten Polyesterharzes oder eines Gemischs aus einem ungesättigten Polyesterharz und einem weiteren Harz als Komponente A, wobei das ungesättigte Polyesterharz der Komponente A Dihydrodicyclopentadien-Struktureinheiten oder Isoprenylgruppen aufweist,
b) 1 bis 20 Gew.-% mindestens eines Polybutadiens als Komponente B;
c) 0,01 bis 5,0 Gew.-% eines oder mehrerer emulsionsstablisierender Additive als Komponente C;
d) 0 bis 5,0 Gew.-% eines oder mehrerer Härtungsbeschleuniger als Komponente D,
wobei die Summe der Komponenten A bis D 100 Gew.-% ergibt.

Überraschenderweise hat sich gezeigt, dass ein zweiphasiges System aus einem ungesättigten Polyesterharz und einem damit nicht verträglichen - das heißt nicht in beliebigen Mengenverhältnissen homogen mit dem Polyesterharz mischbaren - Polybutadienharz rissfrei härtet und gute elektrische, thermische und mechanische Eigenschaften aufweist.

Die erfindungsgemäßen Harzformulierungen sind als Überzugsmassen für die Elektroisolation von Großmaschinen sehr gut geeignet, da sie auch in dicken Schichten eine hervorragende Rissbeständigkeit im ausgehärteten Zustand aufweisen. Die Harzformulierungen können alleine oder in Kombination mit festen Isoliermaterialen wie Bändern dazu verwendet werden, elektrische Geräte wie zum Beispiel Motoren, Transformatoren und Generatoren zu isolieren.

Das Flüssigharz ist ausreichend lagerstabil und weist im ausgehärteten Zustand konstante Eigenschaften auf, die unabhängig von Lagerung und Verarbeitung sind.

Die erfindungsgemäße Formulierung zur Imprägnierung enthält als Komponente A ein ungesättigtes Polyesterharz, beispielsweise wie in EP-A 0 968 501 oder in EP-A 1 122 282 beschrieben, als Komponente B ein Polybutadien, das vorzugsweise als disperse Phase in der Komponente A verteilt vorliegt, optional als Komponente C ein oder mehrere Additive zur Stabilisierung der Emulsion von Komponente B in Komponente A sowie optional als Komponente D einen oder mehrere Härtungsbeschleuniger.

Die Komponente A enthält als Bindemittel ein ungesättigtes Polyesterharz oder ein Gemisch von ungesättigten Polyesterharzen mit Dihydrodicyclopentadien-Struktureinheiten oder Isoprenylgruppen. Diese sind aufgebaut aus Polyolen wie Glykolen, ungesättigten Polycarbonsäuren wie Maleinsäure und Fumarsäure, sowie gegebenenfalls weiteren Komponenten wie mono funktionellen Alkoholen und Carbonsäuren als Kettenabbrecher. Die Polyesterharze können mit kettenständigen oder endständigen Imidgruppen, Dihydrodicyclopentadiengruppen sowie anderen Strukturelementen, beispielsweise terminalen Propenyl oder Isoprenyl-Gruppen, modifiziert sein. Die Komponente A kann weitere Harze enthalten.

Die Komponente B enthält bei Raumtemperatur im Allgemeinen flüssige Polybutadienharzen, die neben Doppelbindungen optional noch andere reaktive Gruppen enthalten können. Es können auch Gemische verschiedener Polybutadienharze eingesetzt werden. Diese sind mit dem oder den ungesättigten Polyesterharzen oder dem Harzgemisch der Komponente A im Allgemeinen nicht homogen mischbar, d. h. sie bilden mit der Komponente A eine Emulsion aus. Dabei liegt die Komponente B im Allgemeinen in der Komponente A dispers verteilt vor, d. h. die Komponente B bildet die disperse und die Komponente A die kontinuierliche Phase der Emulsion aus. Die Komponente B kann in der Komponente A selbstemulgierend sein. Im Allgemeinen wird sie unter Zusatz von emulgierenden Additiven in der Komponente A emulgiert.

Erfindungsgemäß enthält die Komponente A als Bindemittel der erfindungsgemäßen Harzzusammensetzungen mindestens ein ungesättigtes Polyesterharz mit Dihydrodicyclopentadien-Struktureinheiten oder Isoprenylgruppen, das optional Imidgruppen enthalten kann. Ungesättigte Polyesterharze sind an sich bekannt und werden durch die Reaktion von Polyolen, mehrfunktionellen ungesättigten Carbonsäuren und gegebenenfalls mono funktionellen Verbindungen als Kettenabbrecher hergestellt. Die Herstellung der ungesättigten Polyesterharze ist allgemein bekannt. Dabei werden die Komponenten mit oder ohne Veresterungskatalysatoren üblicherweise auf Temperaturen zwischen 160 und 200°C erhitzt. Die Reaktion wird üblicherweise unter Schutzgas durchgeführt. Das bei der Kondensationsreaktion gebildete Wasser kann unter Verwendung eines geeigneten Lösungsmittels azeotrop abdestilliert oder durch Vakuumdestillation abgetrennt werden. Der Reaktionsfortschritt wird üblicherweise durch Bestimmung der Säurezahl und/oder der Viskosität kontrolliert.

Zur Herstellung der ungesättigten Polyester bevorzugte Polyole sind ausgewählt aus Ethylenglykol, 1,3-Propandiol, 2-Methyl-1,3-propandiol, Di- und Triethylenglykol, Neopentylglykol, 1,3- und 1,6-Hexandiol, Perhydrobisphenol-A, Glycerin, Trimethylolpropan, Tris-(2-hydroxyethyl)isocyanurat, Pentaerythrit und Dipentaerythrit. Bevorzugt sind Di- und Triethylenglykol, 2-Methyl-1,3-propandiol, Glycerin, Neopentylglykol und Trimethylolpropan.

Zur Herstellung der ungesättigten Polyester bevorzugte ungesättigte Carbonsäuren sind α,β-ungesättigte Dicarbonsäuren und deren Anhydride wie Maleinsäure, Maleinsäurenahydrid und Fumarsäure. Bevorzugt sind weiterhin Gemische von α,β-ungesättigten Dicarbonsäuren mit weiteren, modifizierend wirkenden Dicarbonsäuren, bevorzugt mit gesättigten aliphatischen oder aromatische Dicarbonsäuren und deren Anhydriden wie Adipinsäure, Bernsteinsäure, Phthalsäureanhydrid, Isophthalsäure, Terephthalsäure und 2,6-Naphthalindicarbonsäure. Bevorzugt sind Maleinsäureanhydrid und Gemische aus Maleinsäureanhydrid und Adipinsäure.

Als Kettenabbrecher werden im Allgemeinen monofunktionelle Carbonsäuren oder monofunktionelle Alkohole mitverwendet, beispielsweise Tallölfettsäure, Benzoesäure, 2-Ethylhexansäure, Hexanol, 2-Ethylhexanol, Benzylalkohol, tert.-Butanol und Isoprenol (3-Methyl-3-buten-1-ol). Bevorzugt werden Hexanol, Isoprenol sowie das Reaktionsprodukt von Tetrahydrophthalsäureanhydrid mit Ethanolamin als Kettenabbrecher mit umgesetzt.

Die ungesättigten Polyesterharze können mit endständigen oder kettenständigen Imidgruppen modifiziert sein. Endständige Imidgruppen können beispielsweise durch Umsetzung mit dem Reaktionsprodukt aus Tetrahydrophthalsäureanhydrid und Ethanolamin eingeführt werden. Diese und weitere geeignete monofunktionelle, Imidgruppen aufweisende Verbindungen, die als Kettenabbrecher fungieren, sind in DE-A 1 570 273 beschrieben.

Kettenständige Imidgruppen können beispielsweise durch Umsetzung mit Imidgruppen enthaltenden Verbindungen eingeführt werden. Diese werden durch Reaktion zwischen Verbindung erhalten, von denen die eine Verbindung eine Carbonsäureanhydrid-Gruppe sowie eine weitere funktionelle Gruppe aufweist, während die andere Verbindung eine primäre Aminogruppe und eine weitere funktionelle Gruppe aufweist. Diese weiteren funktionellen Gruppen sind solche, die mit den Polyol- oder Polycarbonsäure-Komponenten des ungesättigten Polyesterharzes unter Einbau in die Polymerkette reagieren können. Im Allgemeinen handelt es sich bei diesen weiteren funktionellen Gruppen um Carbonsäuregruppen oder Hydroxylgruppen. Es können aber auch primäre Aminogruppen oder Carbonsäureanhydridgruppen als weitere funktionelle Gruppen in diesen Verbindungen vorliegen. Geeignete Verbindungen sind in DE 1 720 323 beschrieben.

Geeignete Verbindungen mit einer Carbonsäureanhydrid-Gruppe und einer weiteren funktionellen Gruppe sind Pyromellitsäuredianhydrid und Trimellitsäureanhydrid. Es kommen jedoch auch andere aromatische Carbonsäureanhydride in Frage, beispielsweise die Naphthalintetracarbonsäuredianhydride oder Dianhydride von Tetracarbonsäuren mit zwei Benzolkernen, bei denen die Carboxylgruppen in 3,3',4- und 4'-Stellung stehen. Beispiele für Verbindungen mit primären Aminogruppen sind insbesondere diprimäre Diamine, z.B. Ethylendiamin, Tetramethylendiamin, Hexamethylendiamin, Nonamethylendiamin und andere aliphatische diprimäre Diamine.

Ferner kommen aromatische diprimäre Diamine, wie Benzidin, Diaminodiphenylmethan, Diaminodiphenylsulfon, -sulfoxid, -ether und -thioether, Phenylendiamine, Toluylendiamine sowie Diamine mit drei Benzolkernen im Molekül, z.B. Bis(4-aminophenoxy)-1,4-benzol in Betracht

In Frage kommen schließlich cycloaliphatische Diamine wie 4,4'-Dicyclohexylmethandiamin.

Beispielsweise können Imidgruppen durch Umsetzung mit Verbindungen, die durch Reaktion von 1 mol Trimellitsäureanhydrid und 2 mol der genannten diprimären Diamine erhältlich sind, in die Polymerkette eingeführt werden.

Als aminogruppenhaltige Verbindungen mit einer weiteren funktionellen Gruppe sind Aminoalkohole geeignet, z.B. Monoethanolamin und Monopropanolamine, weiterhin Aminocarbonsäuren wie Glycin, Aminopropansäure, Aminocapronsäuren oder Aminobenzoesäuren.

Beispielsweise können Imidgruppen auch durch Umsetzung mit Verbindungen, die durch Reaktion von 1 mol Pyromellitsäuredianhydrid und 2 mol der genannten Aminoalkohole oder Aminocarbonsäuren erhältlich sind, in die Polymerkette eingeführt werden. Beispielsweise können Imidgruppen auch durch Umsetzung mit Verbindungen, die durch Reaktion von 1 mol Trimellitsäureanhydrid mit 1 mol der genannten Aminocarbonsäuren erhältlich sind, in die Polymerkette eingeführt werden.

Die Polyesterharze können, wie in EP 1 122 282 beschrieben, von Dihydrodicyclopentadien abgeleitete Struktureinheiten aufweisen. Diese können durch Umsetzung mit Dihydrodicyclopentadienol oder durch Umsetzung mit den Addukten von Maleinsäure an Dicycolopentadien in die ungesättigten Polyester oder Polyesterimide eingeführt werden. Weiterhin können die ungesättigten Polyesterharze durch Pfropfung mit Cyclopentadien Endomethylentetrahydrophthalsäurestrukturen aufweisen, wie ebenfalls in EP 1 122 282 beschrieben.

Die ungesättigten Polyesterharze können auch terminale Propenyl- oder Isoprenylgruppen aufweisen, welche als Propenyl- oder Isoprenylether- oder Propenyl- oder Isoprenylestergruppen vorliegen können und, wie in EP 1 122 282 beschrieben, durch Umsetzung mit Isopropenylbenzyl-m-isopropylisocyanat, 1-Propenylglycidylether oder Isoprenol in die Polyester oder Polyesterimide eingeführt werden können. Bevorzugt wird Isoprenol verwendet.

In einer Ausführungsform der Erfindung weisen die Polyester der Komponente A kettenständige oder endständige Imidgruppen auf. In einer weiteren Ausführungsform weisen die Polyester der Komponente A Dihydrodicyclopentadien-Gruppen auf. In einer bevorzugten Ausführungsform der Erfindung weisen die Polyester der Komponente A kettenständige oder endständige Imidgruppen und Dihydrodicyclopentadien-Gruppen auf. In einer weiteren Ausführungform der Erfindung weisen die Polyester der Komponente A Propenyl- oder Isoprenylgruppen auf. In einer speziellen Ausführungsform enthält die Komponente A sowohl Polyester, die kettenständige oder endständige Imidgruppen und Dihydrodicyclopentadien-Gruppen aufweisen (Polyester 1) als auch Polyester, die Propenyl- oder Isoprenylgruppen aufweisen (Polyester 2). Beispielsweise kann Komponente A ein Gemisch aus 50 bis 90 Gew.-Teilen Polyester 1 und 10 bis 50 Gew.-Teilen Polyester 2 enthalten.

Weiterhin kann die Komponente A Stabilisatoren (Polymerisationsinhibitoren) enthalten. Diese sind dem Fachmann bekannte alkylierte Phenole, Hydrochinone und Benzochinone, wie Hydrochinon, Methylhydrochinon, p-Benzochinon und 2,4-Di-tert.-butylphenol. Diese sind im Allgemeinen in Mengen von 0,001 bis 0,500 Gew.-Teilen, bezogen auf 100 Gew.-Teile des ungesättigten Polyesterharzes, enthalten.

Die Komponente A kann neben dem ungesättigten Polyesterharz oder Polyesterharz-Gemisch noch von Polyesterharzen verschiedene weitere Harze enthalten. Als Mischungskomponente geeignet sind insbesondere Epoxidharze.

Geeignete Epoxidharze sind Bisphenol-A-Epoxidharze, Bisphenol-F-Epoxidharze und Epoxid-Novolake auf Basis von Phenolnovolak oder Kresolnovolak. Diese sind üblicher Weise durch Umsetzung von Phenol-Formaldehyd-Harzen bzw. Kresol-Formaldehyd-Harzen mit Epichlorhydrin oder Methylepichlorhydrin als Glycidylether bzw. Methylglycidylether erhältlich. Die Komponente A enthält neben dem Epoxidharz dann auch die zur Härtung der Epoxidharze benötigten Mengen an Härter. Geeignete Härter sind Lewissäuren, im Allgemeinen Komplexe von BF₃ oder BCl₃ mit tertiären Aminen, beispielsweise BCl₃-Dimethyloctylamin, BF₃-Trimethylamin und BF₃-Tributylamin. Geeignete Härter sind weiterhin Carbonssäureanhydride, wie Tetrahydrophthalsäureanhydrid, Methyltetrahydophthalsäureanhydrid, Hexahydrophthalsäureanhydrid und Dodecylbensteinsäureanhydrid. Die Lewissäure-Härter sind im Allgemeinen in Mengen von 0,1 bis 5 Gew.-Teilen, bezogen auf 100 Gew.-Teile Epoxidharz, enthalten. Die Anhydride werden in äquivalenten Mengen, bezogen auf das Epoxidharz, eingesetzt.

In einer Ausführungsform der Erfindung enthält die Komponente A nur ungesättigte Polyesterharze. In einer weiteren Ausführungsform enthält die Komponete A 65 bis 90 Gew.-% ungesättigte Polyesterharze und 10 bis 35 Gew.-% Epoxidharze, bezogen auf alle Bestandteile der Komponente A.

Die erfindungsgemäßen Harzzusammensetzungen enthalten bevorzugt 88 bis 98 Gew.-%, besonders bevorzugt 92 bis Gew.-98 % der Komponente A.

Die erfindungsgemäßen Harzzusammensetzungen enthalten als Komponente B ein bei Raumtemperatur (23°C) flüssiges Polybutadienharz. Polybutadienharze sind näher charakterisiert durch ihr Molekulargewicht, ihre Viskosität bei Raumtemperatur (23 °C) und ihren Anteil an cis- und trans-konfigurierten Doppelbindungen. Geeignete Polybutadiene weisen ein zahlenmittleres Molekulargewicht im Bereich von 1800 bis 4500, bevorzugt von 2200 bis 3800 auf, bestimmt durch GPC gegen Polystyrostandards. Geeignete Polybutadiene weisen weiterhin im Allgemeinen eine Viskosität bei 23 °C von 500 bis 150 000 mPa.s, bevorzugt von 500 bis 30 000 mPa.s, insbesondere von 500 bis 10 000 mPa.s auf. Geeignete Polybutadiene können einen hohen Anteil an 1,4-verknüpften Butadien-Einheiten mit cis-konfigurierten Doppelbindungen aufweisen, beispielsweise im Bereich von 70 bis 80 %, bezogen auf alle in dem Polybutadien vorliegende Doppelbindungen. Geeignet ist beispielsweise ein Polybutadien mit hohem Anteil an 1,4-cis-Doppelbindungen im Bereich von 75 bis 77 % und einer Viskosität von 700-860 mPa.s bei 23°C. Geeignet sind weiterhin beispielsweise ein Polybutadien mit einer Viskosität von 2700-3300 mPa.s bei 23°C sowie ein Polybutadien mit einer Viskosität von 100 000 mPas bei 23°C.

Geeignete Polybutadiene können auch funktionelle Endgruppen aufweisen. Geeignet sind beispielsweise OH-terminierte Polybutadiene mit Viskositäten im Bereich von 1000 bis 20 000 mPa.s bei 23°C.

Bevorzugt enthalten die erfindungsgemäßen Harzzusammensetzungen 2 bis 10 Gew.-%, besonders bevorzugt 4 bis 6 Gew.-% Polybutadiene, bezogen auf die Summe der Komponenten A bis D.

Die erfindungsgemäßen Harzzusammensetzungen enthalten weiterhin als Additive emulsionsstabilisierende Zusätze. Im Allgemeinen werden, bezogen auf die Summe aller Komponenten, 0,01 Gew.-% bis 5,0 Gew.-%, bevorzugt 0,1 bis 4 Gew.-% und besonders bevorzugt 0,1 bis 3 Gew.-% der stabilisierenden Zusätze verwendet.

Ein geeigneter emulsionsstabilisierender Zusatz ist pyrogene Kieselsäure. Wird pyrogene Kieselsäure eingesetzt, wird diese zuerst in das Polybutadien eingearbeitet. Die erhaltene Paste wird anschließend in die Komponente A eingearbeitet. Weitere die Emulsion stabilisierende Zusätze sind Alkyltrimethoxysilane mit langkettigen Alkylgruppen, vorzugsweise mit 10 bis 30 C-Atomen in der Alkylgruppe.

In einer Ausführungsform der Erfindung wird pyrogene Kieselsäure in Mengen von 0,01-5 Gew.-%, bezogen auf die Summe aller Komponenten A bis D, eingesetzt. In einer weiteren Ausführungsform der Erfindung wird zusätzlich ein Alkyltrimethoxysilan eingesetzt, wobei die Gesamtmenge an stabilisierenden Zusätzen 0,01 bis 5 Gew.-%, bezogen auf die Summe der Komponenten A bis D, beträgt.

Alternativ können die erfindungsgemäßen Harzzusammensetzungen als emulsionsstabilisierenden Zusatz ein Polymer mit polaren und unpolaren Blöcken oder Seitenketten enthalten. Derartige verträglich machende Polymere sind kommerziell erhältlich. Geeignete Polymere weisen polare Blöcke, die mit ungesättigten Polyesterharzen verträglich sind, und unpolare Blöcke oder Seitenketten, die mit Polybutadien verträglich sind, auf. Geeignete Polymere weisen beispielsweise polare Blöcke aus Acrylat-Monomeren und unpolare Blöcke mit Seitenketten aus C₄ - C₁₆-Kohlenwasserstoffresten auf. Im Allgemeinen beträgt die Konzentration dieser verträglich machenden Polymere 0,2 - 3,0 Gew.-%, bezogen auf die Summe aller Komponenten A bis D.

Weiterhin können die erfindungsgemäßen Harzzusammensetzungen als Komponente D bis zu 5 Gew.-% eines oder mehrerer Härtungsbeschleuniger enthalten. Sind diese enthalten, dann im Allgemeinen in Mengen von 0,01 bis 5 Gew.-%, bevorzugt von 0,1 bis 5 Gew.-%, besonders bevorzugt von 1 bis 5 Gew.-%. Geeignete Härtungsbeschleuniger sind mittels UV-Licht oder Hitze aktivierbare, Radikale bildende Polymerisationsinitiatoren. Geeignete Radikale bildende Polymerisationsinitiatoren sind dem Fachmann bekannt. Bevorzugte mittels UV-Licht aktivierbare Polymerisationsinitiatoren sind 4,4'-Dimethylbenzylketal, 4,4'-Dimethoxybenzoin, Benzoinmethylether und 2,4,6-Trimethylbenzoyldiphenylphosphinoxid. Bevorzugte mittels Hitze aktivierbare Polymerisationsinitiatoren sind Dicumylperoxid, Di-tert.-Butylperoxid und tert.-Butylperbenzoat. Auch Kombinationen verschiedener Radikalstarter können verwendet werden.

Die Härtungsbeschleuniger können bei der Herstellung der erfindungsgemäßen Harzzusammensetzungen der Komponente A oder der Komponente B zugegeben werden. Die Härtungsbeschleuniger können aber den Harzzusammensetzungen auch erst vor der Verarbeitung zugegeben werden.

Erfindungsgemäße Zusammensetzungen sind also sowohl solche aus den Komponenten A, B, ggf. C und D, die Härtungsbeschleuniger bereits enthalten, als auch solche aus den Komponenten A, B und ggf. C, denen Härtungsbeschleuniger erst kurz vor der Verarbeitung zugesetzt werden.

Die Erfindung betrifft weiterhin die Verwendung der erfindungsgemäßen Harzformulierungen als Tränk-, Verguss- und Überzugsmassen für elektrische oder elektronische Bauteile und Geräte.

Die erfindungsgemäßen Harzformulierungen können durch in der Praxis übliche Vorgehensweisen, wie z.B. Tauchen, Tauchrollieren, Träufeln, Gießen, Vakuum-Imprägnierung oder Vakuum-Druckimprägnierung in die Wicklung einer Elektromaschine eingebracht werden. Eine thermische Härtung kann in einem Ofen oder durch die Stromwärme der Wicklung oder durch eine Kombination beider Möglichkeiten erfolgen. Enthält die Formulierung einen Photoinitiator, kann sie auf dem Blechpaket mit Hilfe von UV-Licht gehärtet werden. Dieses empfiehlt sich insbesondere, wenn die Härtung mit Stromwärme durchgeführt wird. So kann die Härtung in den inneren Bereichen eines Bauteils durch Stromwärme und eine Härtung an der Oberfläche durch Bestrahlung mit UV-Licht erfolgen.

Die Erfindung wird durch die nachstehenden Beispiele näher erläutert.

### Beispiele

Die eingesetzten Polyesterharze sind in der EP 1 122 282, Beispiele 3 und 4 beschrieben. Verwendet wird eine Mischung von 70 Gewichtsteilen Polyester 1 (siehe unten Beispiel 1) und 30 Gewichtsteilen Polyester 2 (siehe unten Beispiel 2). Das Gemisch wird mit 3 Gew.-% tert.-Butylperbenzoat aktiviert. In den Beispielen 3 bis 6 wird dieses Gemisch kurz als Harz bezeichnet.

### Beispiel 1

Herstellung eines ungesättigten Polyesters (Polyester 1)

In einem Rührkolben mit Destillieraufsatz werden als Vorlage
1441,5 g Maleinsäureanhydrid (17,7 mol)
546,6 g Reaktionsprodukt aus 1 mol Tetrahydrophthalsäure und 1 mol Ethanolamin (2,8 mol)
56,0 g Wasser (3,1 mol)
eingewogen. Die Vorlage wird auf 90 °C erwärmt. Es erfolgt eine exotherme Reaktion. Dann wird ein Zulauf aus
398,0 g Dicyclopentadien 93 % (2,8 mol)
innerhalb von 30 min bei ca. 116 bis 128 °C zugegeben und das Reaktionsgemisch eine Stunde lang bei 125 °C gehalten. Die Heizung wird entfernt und ein Gemisch aus
491,0 g Rizinusöl (OH-Zahl 160)
1009,3 g 2-Methylpropandiol-1,3 (11,2 mol)
7,4 g Dibutylzinnoxid
eingerührt. Unter leichtem Stickstoffstrom wird weiter rasch auf 130 °C aufgeheizt, anschließend innerhalb von 6 Stunden die Temperatur allmählich auf 190 °C erhöht und dabei das entstehende Kondensationswasser abdestilliert.

### Beispiel 2

Herstellung eines niedrigviskosen Isoprenol-terminierten Polyesters (Polyester 2)

In einem Rührkolben mit Heizung und Wasserauskreiser werden
1753,7 g Adipinsäure
1033,6 g Isoprenol
368,4 g Glycerin
200,0 g Toluol
6,0 g Dibutylzinnoxid
eingewogen. Es wird unter einem leichten Stickstoffstrom rasch auf 130 °C aufgeheizt. Unter kräftigem Sieden wird dann Wasser ausgekreist. Nach 3 Stunden lässt die Wasserbildung nach. Dann wird die Temperatur allmählich innerhalb von ca. 2 Stunden auf 190 °C erhöht und dabei das Toluol und noch etwas Wasser abdestilliert.

### Beispiel 3

Aus 420 g Polybutadien mit einer Viskosität von 3000 mPa.s bei 23 °C und 18 g pyrogener Kieselsäure wird eine Paste hergestellt. 46 g diese Paste werden in 820 g Harz eingearbeitet. Die erfindungsgemäße Formulierung ist leicht trübe und hat eine Viskosität von 21 000 mPas. Sie wird in eine Form mit den Abmessungen 100x100x20 mm gegossen und 2 Stunden bei 160°C gehärtet. Man erhält einen rissfreien Formstoff.

### Beispiel 4

In 450 g Polybutadien mit einer Viskosität von 3000 mPa.s bei 23 °C werden 15 g Hexadecyltrimethoxysilan gelöst. Danach werden 15 g pyrogene Kieselsäure zugegeben. Nach der Verpastung werden 50 g dieser Paste zu 890 g Harz zugegeben und in dieses eingearbeitet. Die erfindungsgemäße Formulierung ist leicht trübe und hat eine Viskosität von 19 000 mPas. Sie wird in eine Form mit den Abmessungen 100x100x20 mm gegossen und 2 Stunden bei 160°C gehärtet. Man erhält einen rissfreien Formstoff.

### Beispiel 5

50 g Polybutadien mit einer Viskosität von 3000 mPa.s bei 23 °C, 20 g eines handelsüblichen Additivs auf Acrylatbasis mit unpolaren Seitenketten, und 910 g Harz werden gemischt. Unter einer Disperserscheibe wird daraus eine Emulsion hergestellt. Diese ist leicht trübe und hat eine Viskosität von 9 000 mPa.s. Die Emulsion wird in eine Form mit den Abmessungen 100x100x20 mm gegossen und 2 Stunden bei 160°C gehärtet. Man erhält einen rissfreien Formstoff.

### Beispiel 6

52 g Polybutadien mit einer Viskosität von 800 mPa.s bei 23 °C, 21 g eines handelsüblichen Additivs auf Acrylatbasis mit unpolaren Seitenketten, und 930 g Harz werden gemischt. Unter einer Disperserscheibe wird daraus eine Emulsion hergestellt. Diese ist leicht trübe und hat eine Viskosität von 8 000 mPa.s. Die Emulsion wird in eine Form mit den Abmessungen 100x100x20 mm gegossen und 2 Stunden bei 160 °C gehärtet. Man erhält einen rissfreien Formstoff.

### Vergleichsbeispiel 1

Das Harz wird in eine Form mit den Abmessungen 100x100x20 mm gegossen und 2 Stunden bei 160°C gehärtet. Man erhält einen stark risshaltigen Formstoff.

### Vergleichsbeispiel 2

2 g pyrogene Kieselsäure werden in 890 g Harz eingearbeitet. Das Produkt ist leicht trübe. Es wird in eine Form mit den Abmessungen 100x100x20 mm gegossen und 2 Stunden bei 160°C gehärtet. Man erhält einen risshaltigen Formstoff.

### Vergleichsbeispiel 3

45 g Polybutadien mit einer Viskosität von 3000 mPas bei 23 °C werden in 890 g Harz eingearbeitet. Das Produkt ist leicht trübe. Es wird in eine Form mit den Abmessungen 100x100x20 mm gegossen und 2 Stunden bei 160 °C gehärtet. Man erhält einen inhomogenen Formstoff. Im Inneren ist es risshaltig. An der Oberfläche hat er einen flüssigen Film.

## Patentansprüche

1. Harzformulierung enthaltend
a) 80 bis 99 Gew.-% mindestens eines ungesättigten Polyesterharzes oder eines Gemischs aus einem ungesättigten Polyesterharz und einem weiteren Harz als Komponente A, wobei das ungesättigte Polyesterharz der Komponente A Dihydrodicyclopentadien-Struktureinheiten oder Isoprenylgruppen aufweist,
b) 1 bis 20 Gew.-% mindestens eines Polybutadiens als Komponente B;
c) 0,01 bis 5,0 Gew.-% eines oder mehrerer emulsionsstablisierender Additive als Komponente C;
d) 0 bis 5,0 Gew.-% eines oder mehrerer Härtungsbeschleuniger als Komponente D,
wobei die Summe der Komponenten A bis D 100 Gew.% ergibt.

2. Harzformulierung nach Anspruch 1, **dadurch gekennzeichnet, dass** Komponente B als disperse Phase in Komponente A als kontinuierlicher Phase vorliegt.

3. Harzformulierung nach Anspruch 1 oder 2, **dadurch gekennzeichnet, dass** das ungesättigte Polyesterharz der Komponente A durch Umsetzung eines Polyols, ausgewählt aus der Gruppe bestehend aus Diethylenglykol, Triethylenglykol, Neopentylglykol und Trimethylolpropan, mit einer ungesättigten Dicarbonsäure oder einem Dicarbonsäureanhydrid, ausgewählt aus der Gruppe bestehend aus Maleinsäure, Maleinsäureanhydrid und Fumarsäure, erhältlich. ist.

4. Harzformulierung nach einem der Ansprüche 1 bis 3, **dadurch gekennzeichnet, dass** das ungesättigte Polyesterharz der Komponente A endständige oder kettenständige Imidgruppen enthält.

5. Harzformulierung nach einem der Ansprüche 1 bis 4, **dadurch gekennzeichnet, dass** die Komponente A Polyester mit kettenständigen oder endständigen Imid-Gruppen und Dihydrocyclopentadiengruppen und Polyester mit Isoprenylgruppen enthält.

6. Haxzformulierung nach einem der Ansprüche 1 bis 5, **dadurch gekennzeichnet, dass** das Polybutadien der Komponente B eine Viskosität von 500 bis 150 000 mPa.s bei 23 °C aufweist.

7. Harzformulierung nach einem der Ansprüche 1 bis 6, **dadurch gekennzeichnet, dass** das Polybutadien der Komponente B eine Viskosität im Bereich von 500 bis 30 000 mPa.s bei 23 °C aufweist.

8. Harzformulierung nach einem der Ansprüche 1 bis 7, **dadurch gekennzeichnet, dass** als emulsionsstabilisierendes Additiv pyrogene Kieselsäure enthalten ist.

9. Harzformulierung nach einem der Ansprüche 1 bis 7, **dadurch gekennzeichnet, dass** als emulsionsstabilisierendes Additiv ein Alkyltrimethoxysilan mit 10 bis 30 C-Atomen in der Alkylkette enthalten ist.

10. Harzformulierung nach einem der Ansprüche 1 bis 7, **dadurch gekennzeichnet, dass** als emulsionsstabilisierendes Additiv ein Blockcopolymer enthaltend polare Blöcke aus Acrylat-Monomeren und unpolare Blöcken mit Seitenketten aus C₄ - C₁₆-Kohlenwasserstoffresten, enthalten ist.

11. Harzformulierung nach einem der Ansprüche 1 bis 10, **dadurch gekennzeichnet, dass** 0,01 bis 5 Gew.-% eines Härtungsbeschleunigers enthalten sind.

12. Harzformulierung nach einem der Ansprüche 1 bis 10, **dadurch gekennzeichnet, dass** kein Härtungsbeschleuniger enthalten ist.

13. Verwendung einer Harzformulierung gemäß einem der Ansprüche 1 bis 12 als Tränk-, Verguss- und Überzugsmasse für elektrische oder elektronische Bauteile und Geräte.

## Claims

1. Resin formulation comprising
a) 80% to 99% by weight of at least one unsaturated polyester resin or of a mixture of an unsaturated polyester resin and a further resin, as component A, wherein the unsaturated polyester resin of component A has dihydrodicyclopentadiene structural units or isoprenyl groups,
b) 1% to 20% by weight of at least one polybutadiene as component B;
c) 0.01% to 5.0% by weight of one or more emulsion-stabilizing additives as component C;
d) 0% to 5.0% by weight of one or more curing accelerators as component D,
the sum of components A to D making 100% by weight.

2. Resin formulation according to claim 1, **characterized in that** component B is present as a disperse phase in component A as continuous phase.

3. Resin formulation according to Claim 1 or 2, **characterized in that** the unsaturated polyester resin of component A is obtainable by reacting a polyol selected from the group consisting of diethylene glycol, triethylene glycol, neopentyl glycol and trimethylolpropane with an unsaturated dicarboxylic acid or a dicarboxylic anhydride selected from the group consisting of maleic acid, maleic anhydride and fumaric acid.

4. Resin formulation according to any of Claims 1 to 3, **characterized in that** the unsaturated polyester resin of component A comprises terminal or chain-located imide groups.

5. Resin formulation according to any of Claims 1 to 4, **characterized in that** component A comprises polyesters having chain-located or terminal imide groups and dihydrocyclopentadiene groups and polyesters having propenyl or isoprenyl groups.

6. Resin formulation according to any of Claims 1 to 5, **characterized in that** the polybutadiene of component B has a viscosity of 500 to 150 000 mPa.s at 23°C.

7. Resin formulation according to any of Claims 1 to 6, **characterized in that** the polybutadiene of component B has a viscosity in the range from 500 to 30 000 mPa.s at 23°C.

8. Resin formulation according to any of Claims 1 to 7, comprising fumed silica as emulsion-stabilizing additive.

9. Resin formulation according to any of Claims 1 to 7, comprising an alkyltrimethoxysiloxane having 10 to 30 C atoms in the alkyl chain as emulsion-stabilizing additive.

10. Resin formulation according to any of Claims 1 to 7, comprising a block copolymer comprising polar blocks of acrylate monomers and apolar blocks with side chains of C₄-C₁₆ hydrocarbon radicals as emulsion-stabilizing additive.

11. Resin formulation according to any of Claims 1 to 10, comprising 0.01% to 5% by weight of a curing accelerator.

12. Resin formulation according to any of Claims 1 to 10, comprising no curing accelerator.

13. Use of a resin formulation according to any of Claims 1 to 12 as an impregnating, casting and coating compound for electrical or electronic components and devices.

## Revendications

1. Formulation de résine, contenant :
a) 80 à 99 % en poids d'au moins une résine de polyester insaturée ou d'un mélange d'une résine de polyester insaturée et d'une autre résine en tant que composant A, la résine de polyester insaturée du composant A comprenant des unités structurales dihydrodicyclopentadiène ou des groupes isoprényle,
b) 1 à 20 % en poids d'au moins un polybutadiène en tant que composant B ;
c) 0,01 à 5,0 % en poids d'un ou de plusieurs additifs stabilisateurs d'émulsion en tant que composant C ;
d) 0 à 5,0 % en poids d'un ou de plusieurs accélérateurs de durcissement en tant que composant D, la somme des composants A à D étant de 100 % en poids.

2. Formulation de résine selon la revendication 1, **caractérisée en ce que** le composant B se présente sous la forme d'une phase dispersée dans le composant A en tant que phase continue.

3. Formulation de résine selon la revendication 1 ou 2, **caractérisée en ce que** la résine de polyester insaturée du composant A peut être obtenue par mise en réaction d'un polyol, choisi dans le groupe constitué par le diéthylène glycol, le triéthylène glycol, le néopentylglycol et le triméthylolpropane, avec un acide dicarboxylique insaturé ou un anhydride d'acide dicarboxylique, choisi dans le groupe constitué par l'acide maléique, l'anhydride de l'acide maléique et l'acide fumarique.

4. Formulation de résine selon l'une quelconque des revendications 1 à 3, **caractérisée en ce que** la résine de polyester insaturée du composant A contient des groupes imide terminaux ou caténaires.

5. Formulation de résine selon l'une quelconque des revendications 1 à 4, **caractérisée en ce que** le composant A contient un polyester à groupes imide caténaires ou terminaux et à groupes dihydrocyclopentadiène et un polyester à groupes isoprényle.

6. Formulation de résine selon l'une quelconque des revendications 1 à 5, **caractérisée en ce que** le polybutadiène du composant B présente une viscosité de 500 à 150 000 mPa·s à 23 °C.

7. Formulation de résine selon l'une quelconque des revendications 1 à 6, **caractérisée en ce que** le polybutadiène du composant B présente une viscosité dans la plage allant de 500 à 30 000 mPa·s à 23 °C.

8. Formulation de résine selon l'une quelconque des revendications 1 à 7, **caractérisée en ce que** de la silice pyrogénée est contenue en tant qu'additif stabilisateur d'émulsion.

9. Formulation de résine selon l'une quelconque des revendications 1 à 7, **caractérisée en ce qu'**un alkyltriméthoxysilane contenant 10 à 30 atomes C dans la chaîne alkyle est contenu en tant qu'additif stabilisateur d'émulsion.

10. Formulation de résine selon l'une quelconque des revendications 1 à 7, **caractérisée en ce qu'**un copolymère séquencé contenant des séquences polaires constituées de monomères d'acrylate et des séquences apolaires ayant des chaînes latérales constituées de radicaux hydrocarbonées en C₄-C₁₆, est contenu en tant qu'additif stabilisateur d'émulsion.

11. Formulation de résine selon l'une quelconque des revendications 1 à 10, **caractérisée en ce que** 0,01 à 5 % en poids d'un accélérateur de durcissement est contenu.

12. Formulation de résine selon l'une quelconque des revendications 1 à 10, **caractérisée en ce qu'**aucun accélérateur de durcissement n'est contenu.

13. Utilisation d'une formulation de résine selon l'une quelconque des revendications 1 à 12 en tant que matériau d'imprégnation, de scellement et de revêtement pour composants et appareils électriques ou électroniques.
